# EUROPEAN PATENT SPECIFICATION

(11) **EP 1 679 758 B1**
(45) Date of publication and mention of the grant of the patent: **26.08.2009**
(21) Application number: 06100190.5
(22) Date of filing: 10.01.2006
(51) Int. Cl.: H01M 8/06, B01J 8/02

(54) **Burner assembly for a reformer of a fuel cell system**
Brenneranordnung für eine Reformeranordnung eines Brennstoffzellensystems
Ensemble bruleur pour un dispositf de réformation d'une pile à combustible

(30) Priority: 10.01.2005 KR 2005002119
(43) Date of publication of application: 12.07.2006
(73) Proprietor: Samsung SDI Co., Ltd., Suwon-si Gyeonggi-do (KR)
(72) Inventor: Kim, Ju-Yong, Kiheung-gu, Yongin-si, Kyunggi-do (KR); Park, Zin, Kiheung-gu, Yongin-si, Kyunggi-do (KR); Son, In-Hyuk, Kiheung-gu, Yongin-si, Kyunggi-do (KR)
(74) Representative: Hengelhaupt, Jürgen

(56) References cited:
- US-A- 5 112 527
- US-A- 5 746 985
- US-A1- 2003 188 475
- US-B1- 6 299 994

## Description

### BACKGROUND OF THE INVENTION

### Field of the Invention

The present invention relates to a fuel cell system and, more particularly, to the structure of a burner assembly for the reformer of a fuel cell system.

### Description of the Related Art

A fuel cell is a system for producing electric power. In a fuel cell, chemical reaction energy between oxygen and hydrogen contained in hydrocarbon-group materials such as methanol, ethanol, and natural gas is directly converted into electric energy.

Depending on the type of electrolyte used, the fuel cell is classified into different types including a phosphate fuel cell, molten carbonate fuel cell, solid oxide fuel cell, and polymer electrolyte or alkali fuel cell. Although each of these different types of fuel cells operates using the same principles, they differ in the type of fuel, catalyst, and electrolyte used, as well as in operating temperature.

A polymer electrolyte membrane fuel cell (PEMFC) has been recently developed. Compared to other fuel cells, the PEMFC has excellent output characteristics, a low operating temperature, and fast starting and response characteristics. The PEMFC may be used as a mobile power source for vehicles, a distributed power source for homes and buildings, or as a portable power source for items such as electronic devices. Therefore, the PEMFC has a wide range of applications.

The basic components of the PEMFC are a stack, reformer, fuel tank, and fuel pump. The stack forms the main body of the fuel cell. The fuel pump supplies fuel from the fuel tank to the reformer. The reformer reforms the fuel to generate reformed gas containing hydrogen, and supplies the reformed gas to the stack.

Accordingly, in the stack, the hydrogen supplied from the reformer undergoes an electrochemical reaction with oxygen, separately supplied to the stack, to generate electric energy.

The reformer of the fuel cell system with the structure described above generates hydrogen from fuel through a chemical catalytic reaction using thermal energy, and it has a burner assembly for generating the thermal energy and a reforming reactor for generating hydrogen through a reforming catalytic reaction using the thermal energy.

Then, the burner assembly has a structure that generates thermal energy through the oxidation reaction of fuel and air by an oxidation catalyst provided inside the reactor body.

However, when the conventional reformer begins operating, it maintains a initial reaction temperature for the oxidation catalyst by providing a thermal resource, with a predetermined temperature range, to the reactor body of the burner assembly using a separate heating apparatus, which causes power loss due to the heating of the overall reactor body up to the reaction temperature range.

Since the fuel system is driven using electric power generated by the stack (parasitic power), the parasitic power consumed by the heating apparatus increases. Accordingly, the performance and energy efficiency of the overall system decrease.

In addition, since the reformer heats the reactor body to maintain the reaction initiation temperature of the oxidation catalyst, the initiation time of the reaction of the oxidation catalyst is delayed, and thereby, the heat efficiency and the performance of the reformer are lowered.

An aim of the invention is to provide a reformer of a fuel cell having a reduced reaction initiation time, especially of the oxidation catalyst for the burner assembly of the reformer. If possible, reduce the power consumption of the reformer necessary for maintaining a reaction initiation temperature range of the oxidation catalyst should be reduced too.

US 2003/0188475 A1 refers to a fuel processor capable of converting fuels to hydrogen rich gasses suitable for fuel cells. US 6,299994 B1 discloses a reaction zone apparatus for hydrogen generation of fuel cells.

### SUMMARY OF THE INVENTION

The above-mentioned problem has been solved by the reformer for a fuel cell system according to claim 1. The invention starts from a reformer comprising:
(i) a burner assembly for generating thermal energy through an oxidation catalytic reaction of liquid fuel and air, the burner assembly including a second body being loaded with an oxidation catalyst; and
(ii) a reforming reactor using the thermal energy of the burner assembly for generating hydrogen from liquid fuel and water through a reforming catalytic reaction, the reforming reactor including a first body being loaded with a reforming catalyst.

The inventive reformer is being characterized in that the burner assembly is having a heating member partially embedded within the oxidation catalyst and the second body has a tubular configuration with two ends substantially closed, and one end has a first inlet portion and the other end has a first outlet portion, wherein the heating member is embedded within the oxidation catalyst near the first inlet portion. The reaction initiation time of the oxidation catalyst is reduced because thermal energy is supplied by the heating member. Further, the temperature of the oxidation catalyst is controlled within a reaction initiation temperature required for the oxidation reaction at the initial starting of the fuel cell system. The heating member is shortening the reaction initiation time of the oxidation catalyst when the fuel cell system starts operations by providing a separate auxiliary thermal resource to the oxidation catalyst and to thereby further accelerate the oxidation reaction of the fuel and air. Moreover, an optimal temperature range for the oxidation catalytic reaction could be controlled by the heating member.

The second body is disposed inside the first body thereby forming a first space within the second body and a second space between the first body and the second body.

Preferable the second body is disposed toward the center of the inside of the first body.

Preferable, the first body has a tubular configuration with two ends substantially closed, and one end has a second inlet portion and the other end has a second outlet portion.

Preferable, the heating member has a heating wire adapted to generate heat by utilizing electric power.

The burner for the reformer comprises a body containing a catalyst; and a heating member partially embedded within the catalyst to provide an auxiliary thermal source to the catalyst. The burner for a reformer generates the main thermal source through the oxidation reaction of fuel and oxygen supplied to the body of the burner. The burner body is in a tubular configuration with both ends substantially closed, with one end having an inlet portion and the other end having an outlet portion. The heating member preferable may have a heating wire which generates heat by with predetermined electrical power, and which may be embedded within the catalyst near the inlet portion of the body.

The catalyst preferable comprises a pellet shaped structure. A reformer for a fuel cell system comprises a body with a dual tubular configuration having a first space and a second space independent of each other; a burner assembly having a first catalyst loaded in the first space, a heating member partially embedded within the first catalyst; and a reforming reactor having a second catalyst loaded in the second space. The burner assembly generates an auxiliary thermal source through the heating member and the main thermal source using an oxidation reaction between fuel and oxygen with the first catalyst, with the reforming reactor absorbing the main thermal source to generate hydrogen from fuel through a reforming catalytic reaction by the second catalyst. The body preferable may include a first body having a predetermined inner space; and a second body disposed toward the center of the inside of the first body, wherein the first space is formed inside the second body, and the second space is formed between the first body and the second body.

### BRIEF DESCRIPTION OF THE DRAWINGS

The invention will become apparent and more readily appreciated from the following description of the embodiment, taken in conjunction with the accompanying drawings of which:
FIG. 1 is an overall schematic view of a fuel cell system according to an embodiment of the invention;
FIG. 2 is an exploded perspective view of a stack of FIG. 1;
FIG. 3 is a schematic perspective view of a reformer according to an embodiment of the invention; and
FIG. 4 is a cross-sectional view of FIG. 3.

### DETAILED DESCRIPTION

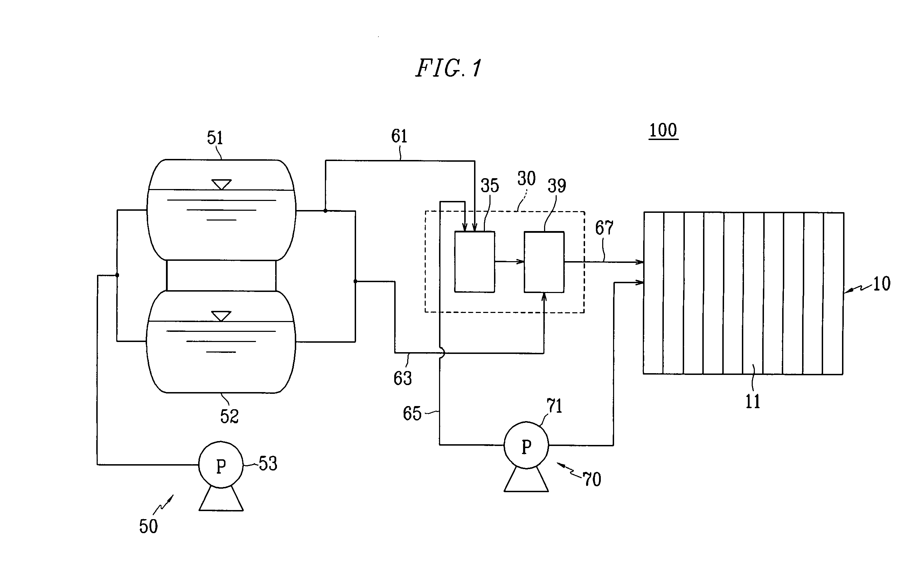

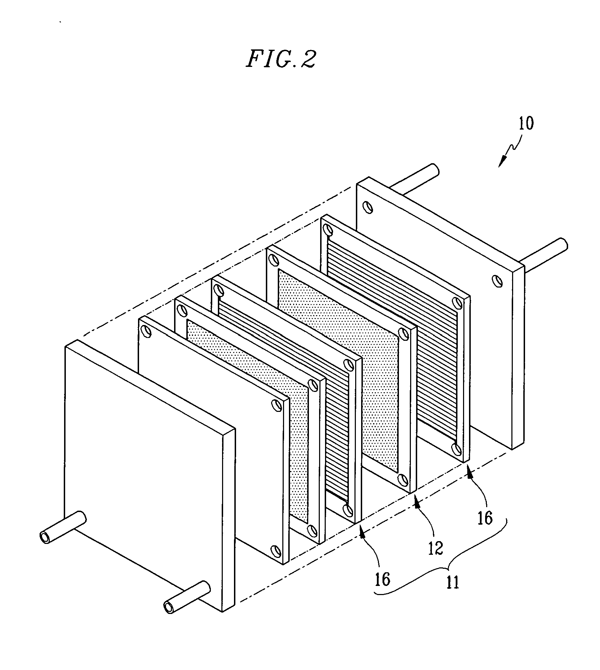

FIG. 1 is an overall schematic view of a fuel cell system according to an embodiment of the present invention, and FIG. 2 is an exploded perspective view of a stack of FIG. 1. Referring to one embodiment shown in the drawings, in the fuel system 100 according to the invention, a polymer electrode membrane fuel cell (PEMFC) method is used in which hydrogen is generated by reforming fuel containing hydrogen, and electrical energy is generated by the electrochemical reaction of the hydrogen and oxidant gas.

In the fuel system 100, fuel for generating electricity is taken to include liquid or gas fuel containing hydrogen such as methanol, ethanol, or natural gas. In the following embodiments, the fuel used is understood to be in liquid form for convenience.

Further, in the fuel cell system 100, oxidant gas to react with hydrogen may be oxygen stored in a separate storage container, or it may simply be air which contains oxygen. In the following embodiments air is used.

The fuel cell system 100 in accordance with one embodiment of the invention includes an electricity generator 11 for generating electrical energy through the electrochemical reaction of hydrogen and oxygen, a reformer 30 for generating hydrogen from the fuel and supplying the hydrogen to the electricity generator 11, a fuel supply assembly 50 for supplying the fuel to the reformer 30, and an oxygen supply assembly 70 for supplying oxygen to the reformer 30 and the electricity generator 11, respectively.

As shown in FIG. 2, the electricity generator 11 forms a unit fuel cell realized with a membrane electrode assembly (MEA) 12 at its center and separators 16 (also known as bipolar plates) provided on both sides thereof.

The fuel cell system 100 may have a plurality of the electricity generators 11 of the above structure, which are continuously arranged to form a stack 10. Since the stack 10 may have the structure of a stack of a general polymer electrolyte membrane fuel cell (PEMFC), the details thereof are omitted herein.

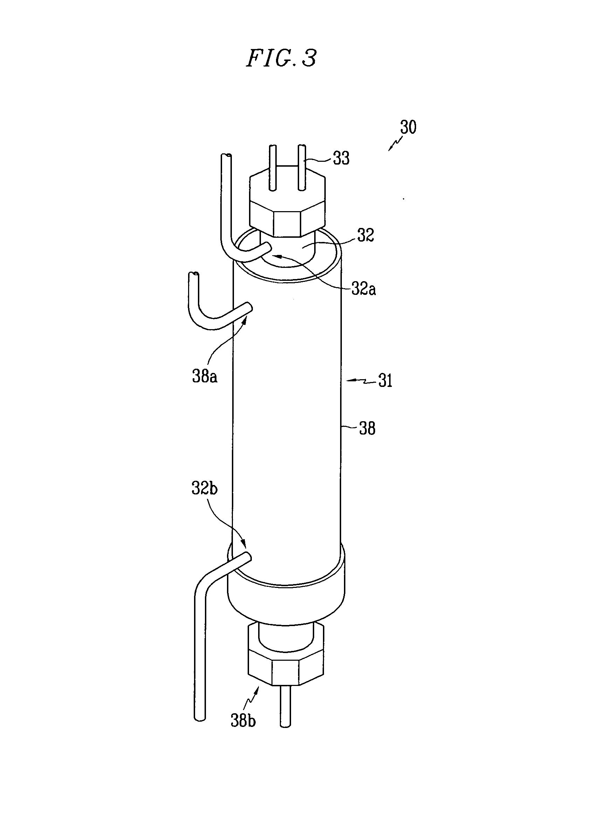

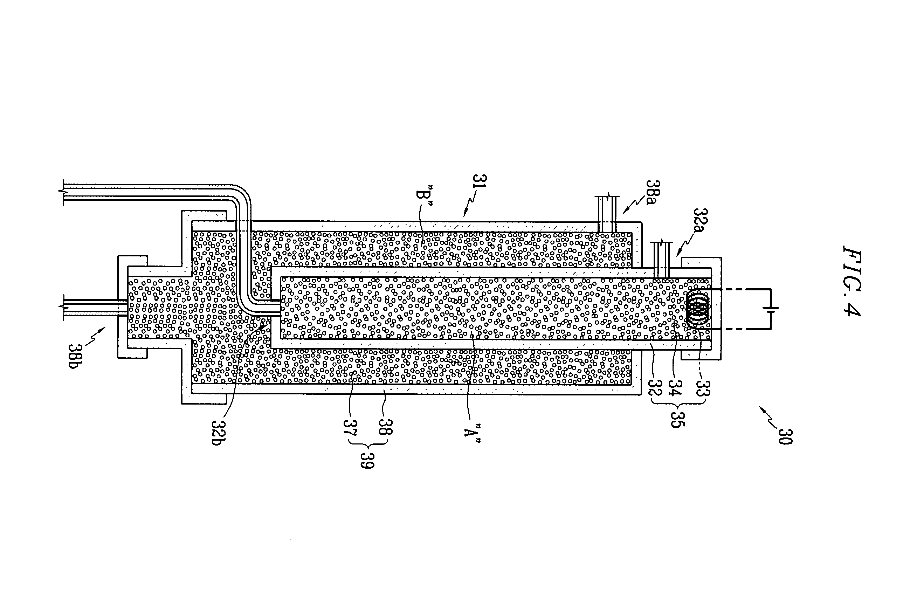

The reformer 30 generates hydrogen from the fuel through a chemical catalytic reaction, for example, a catalytic reaction of steam reforming, partial oxidation, or natural reaction, using thermal energy, and the structure of the reformer 30 will be further explained later with reference to FIG. 3 and FIG. 4

The fuel supply assembly 50 includes a first tank 51 for storing liquid fuel, a second tank 52 for storing water, and a fuel pump 53 connected to the first tank 51 and the second tank 52, respectively, to discharge the fuel and water from the first and second tanks 51 and 52. Then, the first tank 51 may be connected to a burner assembly 35 of the reformer 30 through a pipe line 61, which will be further described below.

The first and second tanks 51 and 52 may be connected to a reforming reactor 39 of the reformer 30 through a pipe line 63, which will be described below. The first and second tanks 51 and 52 are connected to the reforming reactor 39 through the pipe line 63 manifold, as shown in the drawing, but the connection structure thereof is not limited thereto. In another embodiment, these may be connected to each other through different pipe lines from each other.

The oxygen supply assembly 70 includes an air pump 71 for performing the intake of air using a predetermined pressure and supplying the air to the burner assembly 35 and the electricity generator 11 of the stack 10, respectively. The oxygen supply assembly 70, as shown in the drawing, supplies the air to the electricity generator 11 and the burner assembly 35 through a single air pump 71, but it is not limited thereto. In another embodiment, a pair of air pumps can be provided to be connected to the electricity generator 11 and the burner assembly 35, respectively.

When the fuel cell system 100 with the above structure is operated, hydrogen generated from the reformer 30 is supplied to the electricity generator 11, and air is supplied to the electricity generator 11. Then, the stack 10 generates a predetermined amount of electrical energy, water and heat through the electrochemical reaction of hydrogen and oxygen.

The fuel cell system 100 can substantially control overall driving of the system, for example, operation of the fuel supply assembly 50, the air supply assembly 70, a heating member 33 described below, etc. by use of a general, microcomputer type control unit (not shown).

The structure of the reformer 30 will be explained below in detail with reference to the accompanying drawings.

FIG. 3 is a perspective view of a reformer according to an embodiment of the present invention, and FIG. 4 is a cross-sectional view of FIG. 3.

With reference to the drawings the reformer 30 includes a burner assembly 35 for generating thermal energy through the oxidation catalytic reaction of liquid fuel and air, and a reforming reactor 39 for generating hydrogen from liquid fuel and water through a reforming catalytic reaction using the thermal energy.

The reformer 30 includes a body 31 of a dual tubular configuration having a first space (A) and a second space (B) independent of each other. The body 31 includes a first body 38, and a second body 32 disposed inside the first body 38.

The first body 38 which is a body for the reforming reactor has a predetermined cross-sectional area and a tubular configuration with both ends substantially closed, and the first body 38 has a portion exposed outside, which can be made of non metal insulating material or metal with insulation characteristics.

The second body 32 is a body for the burner assembly which has a smaller cross-sectional area than that of the first body 38, and is in a tubular configuration with both ends substantially closed. The second body 32 is disposed toward the center of the inside of the first body 38 with a space between its outer circumference and the inner circumference of the first body 38, and its one end is extended to the outside passing through one end of the first body 38.

The second body 32 may be made of a general metal material with thermal conductivity to facilitate providing the thermal energy generated from the burner assembly 32 to the first body 38.

The second body 32 is a burner body forming the burner assembly 35, and the burner assembly 35 has a structure such that the first space (A) formed by the second body 32 is loaded with an oxidation catalyst 34 and a heating member 33 is partially embedded within the oxidation catalyst 34.

One end of the second body 32 has a first inlet portion 32a for injecting the fuel supplied by the first tank 51 and the air supplied by the air pump 71 to the first space (A), and the other end of the second body 32 has a first outlet portion 32b for discharging combustion gas generated through an oxidation reaction of the fuel and the air by the oxidation catalyst 34. The first inlet portion 32a may be connected to the air pump 71 and the first tank 51 through a pipe line 65.

The first inlet portion 32a, as shown in the drawing, has a structure that injects the air supplied from the air pump 71 and the fuel supplied from the first tank 51 through a single hole, but it is not limited thereto. In another embodiment, respective holes can be provided to inject the fuel and the air, respectively.

The second space (B) is formed between the first body 38 and the second body 32, and it is loaded with a reforming catalyst 37 to form the reforming reactor 39 with the first body 38.

One end of the first body 38 has a second inlet portion 38a for injecting the fuel and water supplied from the first and second tanks 51 and 52 to the second space (B), and the other end has a second outlet portion 38b for discharging hydrogen generated through a reforming reaction of the fuel and water by the reforming catalyst 37.

The second inlet portion 38a, as shown in the drawing, has a structure that injects the fuel and water supplied from the first and second tanks 51 and 52 through a single hole, but it is not limited thereto. In another embodiment, separate holes can be provided to inject the fuel and the water, respectively. The second outlet portion 38b may be connected to the electricity generator 11 of the stack 10 through a pipe line 67. The burner assembly 35 receives the liquid fuel and air, and combusts the fuel and air through an oxidation reaction by the oxidation catalyst 34 to generate thermal energy, and transfers the thermal energy to the reforming reactor 39 described later.

The first space (A) of the burner assembly 35 is loaded with the oxidation catalyst 34, and the heating member 33 is partially embedded within the oxidation catalyst 34 disposed near the inlet portion 32a of the second body 32.

The heating member 33 generates thermal energy by receiving a predetermined amount of electric power, and it supplies thermal energy with the predetermined reaction initiation temperature required for the oxidation reaction for the oxidation catalyst 34 at the initial starting of the fuel cell system, that is, the temperature range of about 60 to 100 °C, to the oxidation catalyst 34.

The reason for installing the heating member 33 is to shorten the reaction initiation time of the oxidation catalyst 34 when the fuel cell system 100 starts operations by providing a separate auxiliary thermal resource to the oxidation catalyst 34 to thereby further accelerate the oxidation reaction of the fuel and air.

In addition the oxidation catalyst 34 combusts the fuel and air to generate the main thermal source with the temperature required for the reforming reaction of the reforming reactor 39, that is, the temperature of about 200 to 300 °C, and includes catalyst material such as platinum (Pt), or ruthenium (Ru), etc. in carriers such as alumina (Al₂O₃), silica (SiO₂), or titanium dioxide (TiO₂), etc. in pellet form.

The reforming reactor 39 absorbs thermal energy generated from the burner assembly 35 and generates hydrogen from the fuel and water through the steam reforming (SR) catalytic reaction of the fuel and water.

The reforming catalyst 37 of the reforming reactor 39 absorbs the main thermal source generated from the burner assembly 35 and accelerates the steam reforming reaction, and carries catalyst material such as copper (Cu), nickel (Ni), or platinum (Pt), etc. in carriers such as alumina (Al₂O₃), silica (SiO₂), or titania (TiO₂), etc. in pellet form.

The following will describe the details of the working process of the fuel cell system according to an embodiment of the invention.

When the fuel cell system 100 starts operations, a predetermined electric power is applied to the heating member 33 through the control unit and then, the heating member 33 generates thermal energy at a predetermined temperature by the electric resistance of the electric power, and thereby provides an auxiliary thermal source with the predetermined reaction initiation temperature required for the oxidation reaction of the oxidation catalyst 34, that is, the temperature range of about 60 to 100 °C, to the oxidation catalyst 34.

Subsequently, fuel stored in the first tank 51 is discharged by the operation of the fuel pump 53, and the fuel is supplied into the second body 32 through the first inlet portion 32a.

Air is supplied into the second body 32 through the first inlet portion 32a by the operation of the air pump 71.

As the fuel and air passes through the burner assembly 35, that is, the oxidation catalyst 34 inside the second body 32, they undergo the oxidation catalytic reaction. Since the oxidation catalyst 34 in the burner assembly 35 maintains the reaction initiation temperature required for the oxidation reaction by the auxiliary thermal resource generated by the heating member 33, the oxidation combustion reaction of the fuel and air is further accelerated.

The liquid fuel and air are combusted through the oxidation catalytic reaction of the liquid fuel and air by the oxidation catalyst 34 in the burner assembly 35 to generate a main thermal source with the predetermined temperature required for the reforming reaction of the reforming reactor 39, for example, the temperature of 200 to 300 °C.

The main thermal source is transferred to the reforming catalyst 37 through the second body 32, and the combustion gas of a relatively high temperature, generated from the inside of the second body 32, is discharged outside through the first outlet portion 32b. At this state, the liquid fuel stored in the first tank 51 and the water stored in the second tank 52 are supplied to the second inlet portion 38a of the first body 38 by operation of the fuel pump 53.

The fuel and water undergo the steam reforming reaction passing through the reforming catalyst 37, and then the reforming catalyst 37 receives the main thermal source, generated from the burner assembly 35, to maintain the predetermined reaction initiation temperature required for the reforming reaction, as described above. At the same time within the reforming reactor 39, the reformed gas containing hydrogen is generated in a decomposition reaction (endothermic reaction) by the reforming catalyst 37.

The reformed gas is discharged through the second outlet portion 38b to be supplied to the stack 10, and the electricity energy generated therefrom is used as power source for driving a predetermined load, for example, portable electronic devices such as laptop computers, portable digital assistants (PDA), etc, or mobile communication terminals.

In an embodiment, as described above, since the invention has a heating member partially embedded within an oxidation catalyst forming a burner assembly of the reformer to supply an auxiliary thermal source to the oxidation catalyst, it can reduce the reaction initiation time of the oxidation catalyst to thereby maximize the performance and heat efficiency of the overall reformer.

In addition, since the present invention can reduce the power consumption necessary for preheating the oxidation catalyst of the burner assembly, it can further enhance the performance and energy efficiency of the overall system.

## Claims

1. A reformer (30) for a fuel cell system (100), comprising:
(i) a burner assembly (35) for generating thermal energy through an oxidation catalytic reaction of liquid fuel and air, the burner assembly (35) including a second body (32) being loaded with an oxidation catalyst (34); and
(ii) a reforming reactor (39) using the thermal energy of the burner assembly (35) for generating hydrogen from liquid fuel and water through a reforming catalytic reaction, the reforming reactor (39) including a first body (38) being loaded with a reforming catalyst (37),
the reformer (30) being **characterized in that**
the burner assembly (35) is having a heating member (33) partially embedded within the oxidation catalyst (34) and wherein the second body (32) has a tubular configuration with two ends substantially closed, and one end has a first inlet portion (32a) and the other end has a first outlet portion (32b), wherein the heating member (33) is embedded within the oxidation catalyst (34) near the first inlet portion (32a), wherein the second body (32) is disposed inside the first body (38) thereby forming a first space (A) within the second body (32) and a second space (B) between the first body (38) and the second body (32), wherein the first space (A) and the second space (B) are independent of each other.

2. The reformer of claim 1, wherein the second body (32) is disposed toward the center of the inside of the first body (38).

3. The reformer of claim 1, wherein the heating member (33) has a heating wire adapted to generate heat by utilizing electric power.

## Patentansprüche

1. Ein Reformer (30) für ein Brennstoffzellensystem (100), umfassend:
(i) eine Brenneranordnung (35) zum Erzeugen thermischer Energie durch eine katalytische Oxidationsreaktion von flüssigem Brennstoff und Luft, wobei die Brenneranordnung (35) einen zweiten Körper (32) beinhaltet, der mit einem Oxidationskatalysator (34) beladen ist; und
(ii) einen Reformierungsreaktor (39), der die thermische Energie der Brenneranordnung (35) zum Erzeugen von Wasserstoff aus flüssigem Brennstoff und Wasser durch eine katalytische Reformierungsreaktion verwendet, wobei der Reformierungsreaktor (39) einen ersten Körper (38) beinhaltet, der mit einem Reformierungskatalysator (37) beladen ist,
wobei der Reformer (30) **dadurch gekennzeichnet ist, dass**
die Brenneranordnung (35) ein Heizelement (33) aufweist, das teilweise innerhalb des Oxidationskatalysators (34) eingebettet ist, und wobei der zweite Körper (32) eine röhrenförmige Konfiguration mit zwei im Wesentlichen geschlossenen Enden aufweist und ein Ende einen ersten Einlassteil (32a) aufweist und das andere Ende einen ersten Auslassteil (32b) aufweist,
wobei das Heizelement (33) innerhalb des Oxidationskatalysators (34) in der Nähe des ersten Einlassteils (32a) eingebettet ist, wobei der zweite Körper (32) innerhalb des ersten Körpers (38) angeordnet ist und dadurch einen ersten Raum (A) innerhalb des zweiten Körpers (32) und einen zweiten Raum (B) zwischen dem ersten Körper (38) und dem zweiten Körper (32) bildet, wobei der erste Raum (A) und der zweite Raum (B) unabhängig voneinander sind.

2. Der Reformer nach Anspruch 1, wobei der zweite Körper (32) in Richtung des Mittelpunkts des Inneren des ersten Körpers (39) angeordnet ist.

3. Der Reformer nach Anspruch 1, wobei das Heizelement (33) einen Heizdraht aufweist, der dazu ausgelegt ist, durch Verwenden elektrischer Leistung Wärme zu erzeugen.

## Revendications

1. Unité (30) de reformage pour un système (100) de piles à combustible, comprenant :
(i) un ensemble brûleur (35) destiné à engendrer de l'énergie thermique au moyen d'une réaction catalytique d'oxydation de combustible liquide et d'air, l'ensemble brûleur (35) incluant un second corps (32) qui est chargé avec un catalyseur (34) d'oxydation ; et
(ii) un réacteur (39) de reformage utilisant l'énergie thermique de l'ensemble brûleur (35) pour engendrer de l'hydrogène à partir de combustible liquide et d'eau au moyen d'une réaction catalytique de reformage, le réacteur (39) de reformage incluant un premier corps (38) qui est chargé avec un catalyseur (37) de reformage,
l'unité (30) de reformage étant **caractérisée en ce que**
l'ensemble brûleur (35) comporte un élément chauffant (33) partiellement incorporé à l'intérieur du catalyseur (34) d'oxydation, le second corps (32) ayant une configuration tubulaire avec deux extrémités pratiquement fermées, et une extrémité possède une première partie (32a) d'entrée et l'autre extrémité possède une première partie (32b) de sortie, l'élément chauffant (33) étant incorporé à l'intérieur du catalyseur (34) d'oxydation près de la première partie (32a) d'entrée, le second corps (32) étant disposé à l'intérieur du premier corps (38) en formant ainsi un premier espace (A) à l'intérieur du second corps (32) et un second espace (B) entre le premier corps (38) et le second corps (32), le premier espace (A) et le second espace (B) étant indépendants l'un de l'autre.

2. Unité de reformage selon la revendication 1, dans laquelle le second corps (32) est disposé en direction du centre de l'intérieur du premier corps (38).

3. Unité de reformage selon la revendication 1, dans laquelle l'élément chauffant (33) comporte un fil chauffant apte à engendrer de la chaleur en utilisant du courant électrique.
